# EUROPEAN PATENT APPLICATION

(11) **EP 1 903 686 A1**
(43) Date of publication of application: **26.03.2008**
(21) Application number: 07018546.7
(22) Date of filing: 21.09.2007
(51) Int. Cl.: H04B 3/54

(54) **Data communication method and apparatus using power line**

(30) Priority: 22.09.2006 KR 20060092317
(71) Applicant: Averd Co. Ltd., Goyang-si, Gyeonggi-do 411-722 (KR)
(72) Inventor: Noh, Si Youl, Yangju-si, Kyunggi-do (KR)
(74) Representative: Simmelvuo, Markku Kalevi

(57) **Abstract**

Disclosed herein is a data communication method and apparatus for transmitting and receiving data in the form of a square-wave signal having a specific amplitude using an AC power line between a transmitter and a receiver connected in a closed circuit by cutting an AC voltage waveform and loading the data on the AC voltage waveform. The transmitter comprises a transmitter power supply unit 10, a data window detector 20 for clamping a voltage signal from the power line N to detect a section of the voltage signal on which data will be loaded, a microcomputer 30 for transmitting the data in a data-loading period and controlling data transmission in response to a reception feedback signal from a receiver, a data modulator 40 for loading the data transmitted from the microcomputer 30 on the voltage signal from the power line N in the form of a pulse signal, a pulse level controller 50 for adjusting a drive voltage of the data modulator 40 to control a data transmission pulse level to be stabilized, and a reception detector 60 for feeding back information on whether the receiver receives the signal transmitted from the transmitter to the microcomputer 30. The receiver comprises a data window detector 80, a data pulse detector 90 and a microcomputer 100. Logic circuits can replace the microcomputer 100.

## Description

### BACKGROUND OF THE INVENTION

### Field of the Invention

The present invention relates to communication using an AC power line, and more particularly, to a data communication method and apparatus for transmitting and receiving data in the form of a square-wave signal having a specific amplitude using an AC power line between a transmitter and a receiver connected in a closed circuit by cutting an AC voltage waveform and loading the data on the AC voltage waveform.

### Background of the Related Art

Generally, a data communication method using a power line network becomes the center of attention because it uses the existing power lines without installing an additional communication line, and associated equipment for carrying out the data communication method is being developed.

A power line communication (PLC) method that has been spotlighted recently has a merit of being capable of transmit large-capacity data at high speed because it uses a high frequency. However, since the PLC method carries a signal on an open power line to transmit the signal, the signal may interfere with a device adjacent to a device to which the signal is transmitted. In order to prevent such interference, a multi-stage band pass filter and a complicated receiver are required. Accordingly, the manufacturing cost of a PLC system is greatly increased and installation of the PLC system is made complicated.

### SUMMARY OF THE INVENTION

Accordingly, the present invention has been made in view of the above-mentioned problems occurring in the prior art, and it is a primary object of the present invention to provide a data communication method and apparatus using a power line, which transmits and receives data of several kbps between a transmitter and a receiver connected in a closed circuit by cutting an AC voltage waveform into the form of a square-wave pulse signal and loading the data on the AC voltage signal to thereby prevent the data-loaded voltage signal from unnecessarily propagating to neighboring devices, require no filter, and simplify configurations of the transmitter and the receiver to transmit the data at a low cost.

To accomplish the above object of the present invention, there is provided a data communication method using a power line, which loads data in the form of a square-wave signal having a specific amplitude on an AC voltage signal by cutting the waveform of the AC voltage signal and transmits the data-loaded AC voltage signal from a transmitter to a receiver which are connected to each other in a closed circuit. The transmitter detects a section of the AC voltage waveform on which the data will be loaded, generates the data in the form of a square-wave signal having a predetermined level, directly cuts the AC voltage waveform in such a manner that the section of the AC voltage waveform is down/up based on the square-wave signal, loads the square-wave signal on the AC voltage signal, and transmits the data-loaded AC voltage signal.

The data communication apparatus using a power line includes a transmitter power supply unit for receiving power from a power line and generating a DC voltage for operating components of the transmitter; a data window detector for clamping a positive voltage of an AC voltage from the power line and comparing the clamped voltage with a reference voltage to detect a section of the AC voltage on which data will be loaded; a microcomputer for transmitting the data in a positive voltage period based on the signal output from the data window detector and controlling data transmission in response to a reception feedback signal from a receiver; a data modulator for loading the data transmitted from the microcomputer on the AC voltage signal from the power line in the form of a pulse signal; a pulse level controller for detecting a pulse level of an output terminal of the data modulator, comparing the pulse level with a user-set level and adjusting a drive voltage of the data modulator according to a difference between the pulse level and the user-set level to control a data transmission pulse level to be stabilized; and a reception detector for transmitting the output signal of the data modulator to the power line, detecting a current variation according to whether the receiver receives the signal transmitted from the transmitter and feeding back information on whether the receiver receives the signal transmitted from the transmitter to the microcomputer.

The receiver receiving the data transmitted from the transmitter includes a rectifier for rectifying power from a power line of the receiver to generate a receiver operating voltage; a receiver data window detector for clamping an AC voltage from the power line that transmits data, comparing the clamped AC voltage with a reference voltage and detecting a data-loaded section of the AC voltage; a data pulse detector for filtering and limiting a pulse signal from the power line transmitting the data to detect a square-wave pulse signal; and a microcomputer for detecting an address signal Add and a data signal Data from the square-wave pulse signal detected by the data pulse detector to receive the data according to the output signal of the data window detector and outputting a control signal according to the received data.

The receiver may include a first timer, a second timer, a first AND gate, and a second AND gate instead of the microcomputer. The first timer delays the signal output from the data window detector by a predetermined time. The second timer delays the output signal of the first timer by a predetermined time. The first AND gate detects the output signal of the data pulse detector in a period during which the first timer outputs a signal to detect an address signal, and the second AND gate detects the output signal of the data pulse detector in a period during which the second timer outputs a signal to detect a data signal.

### BRIEF DESCRIPTION OF THE DRAWINGS

The above and other objects, features and advantages of the present invention will be apparent from the following detailed description of the preferred embodiments of the invention in conjunction with the accompanying drawings, in which:

FIG.1 illustrates a configuration of a transmitter of a data communication apparatus using a power line according to an embodiment of the present invention;

FIG.2 illustrates a configuration of a receiver of the data communication apparatus using a power line according to an embodiment of the present invention;

FIG.3 illustrates a configuration of a receiver of a data communication apparatus using a power line according to another embodiment of the present invention;

FIG. 4 is a waveform diagram of signals transferred in the transmitter of the data communication apparatus using a power line according to an embodiment of the present invention;

FIG. 5 is a waveform diagram of signals transferred in a pulse level controller of the transmitter of the data communication apparatus using a power line according to an embodiment of the present invention;

FIG. 6 is a waveform diagram of signals transferred in the receiver of the data communication apparatus using a power line according to an embodiment of the present invention; and

FIG. 7 is a waveform diagram of signals transferred in the receiver of the data communication apparatus using a power line according to another embodiment of the present invention.

### DETAILED DESCRIPTION OF THE PREFERRED EMBODIMENT

The present invention will be described in detail with reference to the appended drawings.

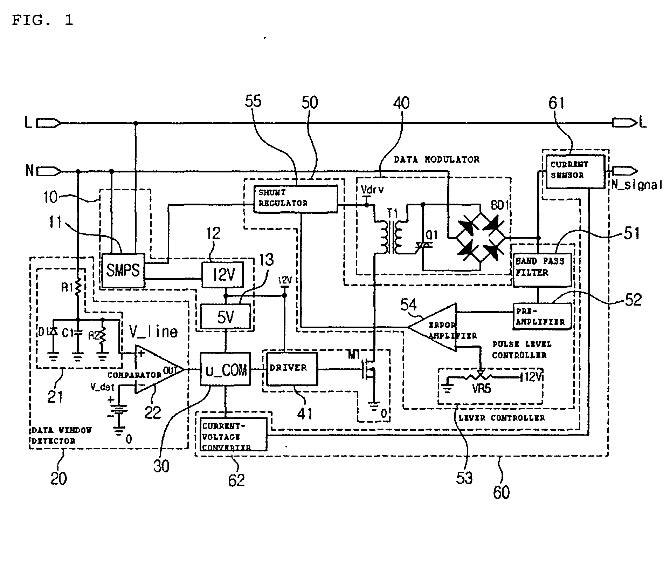

FIG.1 illustrates a configuration of a transmitter of a data communication apparatus using a power line according to an embodiment of the present invention. Referring to FIG. 1, the transmitter includes a transmitter power supply unit 10 for receiving power from a power line N and generating a DC voltage for operating components of the transmitter, a data window detector 20 for clamping an AC voltage from the power line N and comparing the clamped voltage with a reference voltage to detect a section of the waveform of the AC voltage, on which data will be loaded, a microcomputer 30 for transmitting the data in a positive voltage period based on the signal output from the data window detector 20 and controlling data transmission in response to a reception feedback signal from a receiver, a data modulator 40 for loading the data transmitted from the microcomputer 30 on the AC voltage signal from the power line N in the form of a pulse signal, a pulse level controller 50 for detecting a pulse level of an output terminal of the data modulator 40, comparing the pulse level with a user-set level and adjusting a drive voltage of the data modulator 40 according to a difference between the pulse level and the user-set level to control a data transmission pulse level to be stabilized, and a reception detector 60 for transmitting the output signal of the data modulator 40 to the power line N, detecting a current variation according to whether the receiver receives the signal transmitted from the transmitter and feeding back information on whether the receiver receives the signal transmitted from the transmitter to the microcomputer 30.

The transmitter power supply unit 10 includes a switching mode power supply (SMPS) 11 for receiving power from two power lines L and N, rectifying the received power and supplying the drive voltage to the data modulator 40, a 12V regulator 12 for outputting 12V from the output voltage of the SMPS 11, and a 5V regulator 13.

The data window detector 20 includes a clamping unit 21 for dividing the voltage of the power line N using two resistors R1 and R2 and clamping the voltage using a diode D1 and a condenser C1, and a comparator 22 for comparing the output signal of the clamping unit 21 with a reference voltage V_det and outputting a high level square-wave signal in a data loading period.

The data modulator 40 includes a driver 41 for generating a driving signal according to the data transmitted from the microcomputer 30, a switching transistor M1 controlled to be turned on/off by the driver 41, a transformer T1 that switches a DC current of its primary coil according to the switching transistor M1 and outputs the switched DC voltage as a pulse signal to its secondary coil, a triac Q1 controlled to be turned on/off by the output signal of the secondary coil of the transformer T1, and a bridge diode BD1 having a negative terminal receiving the voltage signal of the power line N, a middle control terminal receiving the output signal of the triac Q1 and a positive terminal outputting the voltage signal including the data.

The pulse level controller 50 includes a band pass filter 51 for filtering the output signal of the data modulator 40, a pre-amplifier 52 for amplifying the output signal of the band pass filter 51, a level controller 53 for setting a reference value for controlling the level of the data included in the voltage signal according to a variable resistor VR5 controlled by a user, an error amplifier 54 for comparing the reference value set by the level controller 53 with a pulse level detected by the pre-amplifier 52 and outputting a control signal according to the difference between the reference value and the pulse level, and a shunt regulator 55 for controlling the drive voltage Vdrv provided to the primary coil of the transformer T1 of the data modulator 40 according to the output signal of the error amplifier 54.

The reception detector 60 include a current sensor 61 for sensing a current variation from the power line N that outputs the voltage signal including the data of the data modulator 40, and a current-voltage converter 30 for converting the current sensed by the current sensor 61 into a voltage and applying the voltage to the microcomputer 30.

When the data window detector 20 detects the data-loading period, the microcomputer 30 outputs the data to the driver 41 of the data modulator 40 to transmit the data during the detected data-loading period and ends data transmission when the receiver receives the data while the voltage detected by the reception detector 60 is higher than a predetermined level.

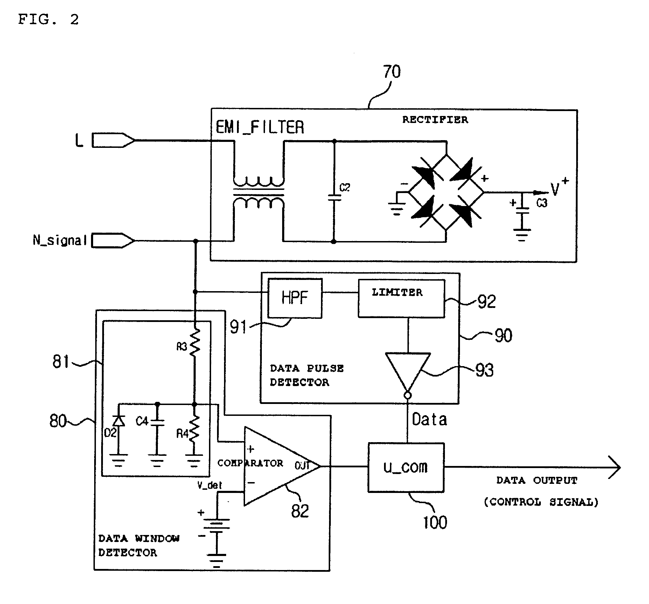

FIG.2 illustrates a configuration of a receiver of the data communication apparatus using a power line according to an embodiment of the present invention. Referring to FIG. 2, the receiver includes a rectifier 70 for rectifying power from power lines L and N of the receiver to generate a receiver operating voltage, a receiver data window detector 80 for clamping an AC voltage from the power line N that transmits data, comparing the clamped AC voltage with a reference voltage and detecting a data-loaded section of the AC voltage, a data pulse detector 90 for filtering and limiting a pulse signal from the power line N transmitting the data to detect a square-wave pulse signal, and a microcomputer 100 for detecting an address signal Add and a data signal Data from the square-wave pulse signal detected by the data pulse detector 90 to receive the data according to the output signal of the data window detector 80 and outputting a control signal according to the received data.

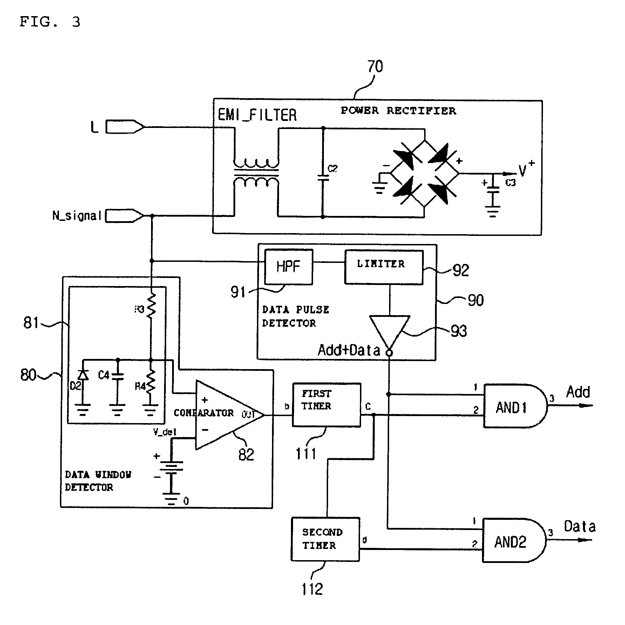

FIG.3 illustrates a configuration of a receiver of a data communication apparatus using a power line according to another embodiment of the present invention. Referring to FIG. 3, the receiver includes a first timer 111, a second timer 112, a first AND gate AND1 and a second AND gate AND2 instead of the microcomputer 100 illustrated in FIG. 2. The first timer 111 delays the signal output from a data window detector 80 by a predetermined time. The second timer 112 delays the output signal of the first timer 111 by a predetermined time. The first AND gate AND1 detects the output signal of a data pulse detector 90 in a period during which the first timer 111 outputs a signal to detect an address signal Add, and the second AND gate AND2 detects the output signal of the data pulse detector 90 in a period during which the second timer 112 outputs a signal to detect a data signal Data.

The operation of the data communication apparatus using a power line according to an embodiment of the present invention will now be explained.

In FIG. 1, a signal from the AC power line L is directly transmitted to the receiver and a signal from the AC power line N passes through predetermined signal processing and is transmitted to the receiver. The terminal of the AC power line N, which is connected to the receiver, is referred to as N_signal. Here, the AC power line L and the AC power line N can be changed with each other.

The SMPS 11 of the power supply unit 10 supplies the drive voltage to the data modulator 40 that generates transmission data. The SMPS 11 outputs two voltages. Specifically, the SMPS provides 5V through the 12V regulator and the 5V regulator and supplies the drive voltage Vdrv used to load a signal to an AC power line.

The clamping unit 21 of the data window detector 20 divides a high AC voltage using the voltage-dividing resistors R1 and R2, the condenser C1 and the diode D1 and clamps a negative voltage to a diode voltage.

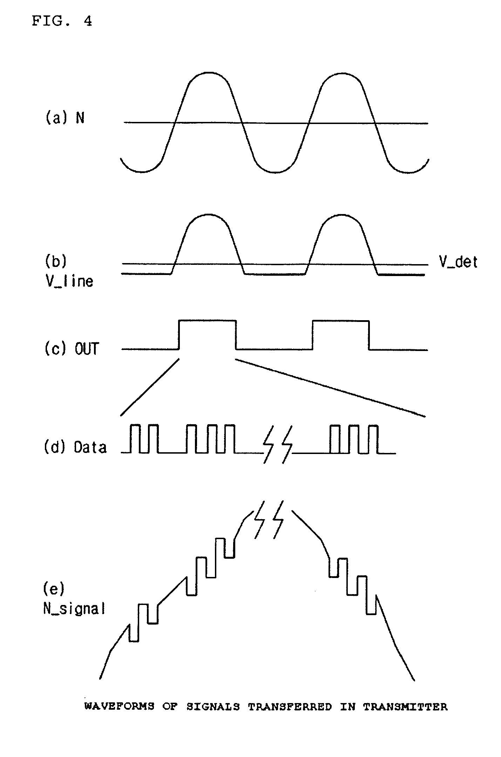

FIG. 4 is a waveform diagram of signals transferred in the transmitter of the data communication apparatus using a power line according to an embodiment of the present invention. Referring to FIG. 4(a), the voltage of the power line N for loading data has a sine waveform. When this sine-wave voltage signal passes through the clamping unit 21, a negative voltage is clamped and only a positive voltage is output, as shown in FIG. 4 (b) .

The comparator 22 compares the clamped voltage with a reference voltage V_det and outputs a square-wave pulse signal as shown in FIG. 4(c). That is, the comparator 22 compares the clamped voltage with the reference voltage V_det and outputs a logic high signal when the clamped voltage is higher than the reference voltage V_det. Accordingly, the square-wave pulse signal, as shown in FIG. 4(c), is output.

The microcomputer 30 receives the output signal of the comparator 22 and outputs the data to the driver 41 during a period in which the output signal of the comparator 22 is logic high. For example, when a transistor M1 of the data modulator 40 is driven with data having a waveform as shown in FIG. 4(d), the data is loaded on an AC voltage, as shown in FIG. 4(e). This data-loaded AC voltage corresponds to the signal N_signal. That is, when the transistor M1 is driven, the primary coil of the transformer T1 is switched by the data as shown in FIG. 4(d) to induce the secondary coil and the secondary coil of the transformer T1 loads the data on the AC voltage through the bridge diode BD1 according to the operation of the triac Q1 to produce the waveform as shown in FIG. 4(e). Here, the amplitude of the data loaded on the AC voltage can be controlled by not only the voltage applied to the primary coil of the transformer T1 but also a turn ratio of the primary coil and the secondary coil of the transformer Y1.

As described above, the data modulator 40 loads the square-wave data signal on the AC voltage in such a manner that the AC voltage waveform is cut and transmits the data-loaded AC voltage. Specifically, the transmitter detects a section of the AC voltage waveform on which the data will be loaded, generates the data in the form of a square-wave signal, directly cuts the AC voltage waveform in such a manner that the section of the AC voltage waveform is up/down based on the square-wave signal to load the square-wave data signal on the AC voltage signal, and transmits the data-loaded AC voltage signal.

In the present invention, in order to detect the level of a signal loaded on the AC power line and maintain the signal level uniform all the time irrespective of a load, the driving voltage Vdrv for loading the signal to the AC power line is controlled using the pulse level controller 50 that is a feedback circuit. The pulse level controller 50 includes the band pass filter 51, the pre-amplifier 52, the level controller 54, the error amplifier 54 and the shunt regulator 55. The band pass filter 51 filters a power frequency of 50 through 60Hz and a high-frequency component corresponding to noise from the signal loaded to the Ac power line. The pre-amplifier 52 amplifies the signal filtered by the band pass filter 51 to a predetermined level and applies the amplified signal to a feedback terminal of the error amplifier 54. One of terminals of the error amplifier 54 determines the level of the signal loaded to the AC power line. The error amplifier 54 compares the level of the signal of the feedback terminal with the level of the signal of the level controller 54 and amplifies the difference between the two signal levels. The shunt regulator 55 is controlled by the output signal of the error amplifier 54 to form a closed loop that controls the driving voltage Vdrv for loading the signal to the AC power line. In this manner, the signal having a specific level is loaded to the AC power line all the time.

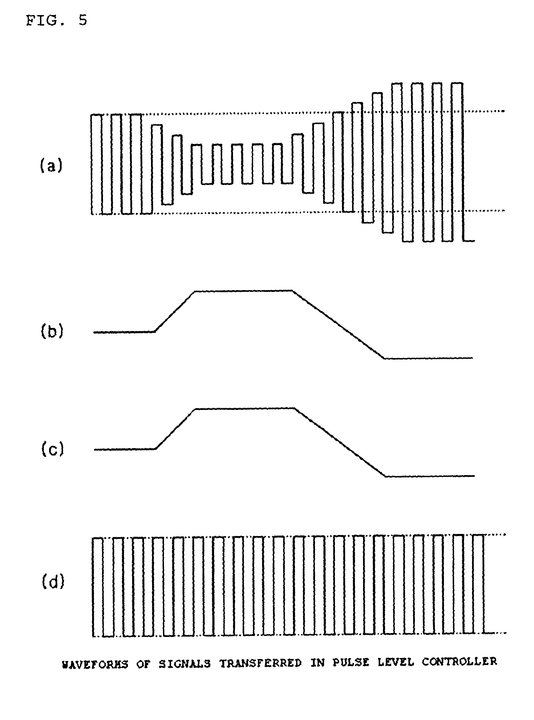

When the band pass filter 51 of the pulse level controller 50 detects the data-loaded AC voltage signal output from the data modulator 40, if the level of the detected signal varies according to the load, as shown in FIG. 5(a), the error amplifier 54 compares the detected signal with the level control value and detects the difference between the detected signal and the level control value, as shown in FIG. 5(b). In the waveform of FIG. 5(b), a high level represents a large difference between the detected signal and the level control value. The shunt regulator 55 controls the driving voltage Vdrv with the waveform as shown in FIG. 5(c) according to the output signal of the error amplifier 54, and thus the data loaded on the AC voltage by the data modulator 40 is maintained as a signal having a uniform level, as shown in FIG. 5(d), through a predetermined feedback process. FIGS. 5(a) and (d) show only the level of the data.

The communication apparatus using a power line according to the present invention includes the reception detector 60 in order to confirm whether the receiver operates in response to a control signal for controlling an electric device including the receiver, which is transmitted from the microcomputer. Here, the control signal corresponds to the data loaded to the AC power line and transmitted to the receiver from the transmitter. The reception detector 60 detects a current transferred to a load using the current sensor 61 and monitors the microcomputer 30 using the current-voltage converter 62. When the receiver does not respond to the control signal, the control signal (data) is re-transmitted to the receiver.

When the transmitter sends the control signal to the receiver, the receiver responds to the control signal after a predetermined delay time. Here, a current variation is generated. The current sensor 61 senses this current variation and the current-voltage converter 62 converts the current variation sensed by the current sensor 61 into a voltage and transmits the voltage to the microcomputer 30 to confirm whether the receiver normally operates. If the current variation does not correspond to the control signal, the microcomputer 30 re-transmits the control signal to the receiver. When the receiver normally receives the control signal, the transmission of data (control signal) is ended. In this manner, the data loaded on the Ac power line is transmitted to the receiver through the AC power line N_signal.

FIG. 2 illustrates a configuration of the receiver of the communication apparatus using a power line according to an embodiment of the present invention, and FIG. 3 illustrates a configuration of the receiver of the communication apparatus using a power line according to another embodiment of the present invention.

The signal transmitted to the receiver through the power line N_signal must be divided into the data and the AC voltage before a power filter of the receiver. That is, the receiver detects the data before the rectifier 70 illustrated in FIG. 3. This is because that, when the transmitter transmits the data to multiple receivers, the data may pass through power filters of the multiple receivers with different attenuation quantities since the power filters may have different frequency characteristics. That is, the rectifier 70 can be used as a power filter that directly provides power of the electric device including the receiver.

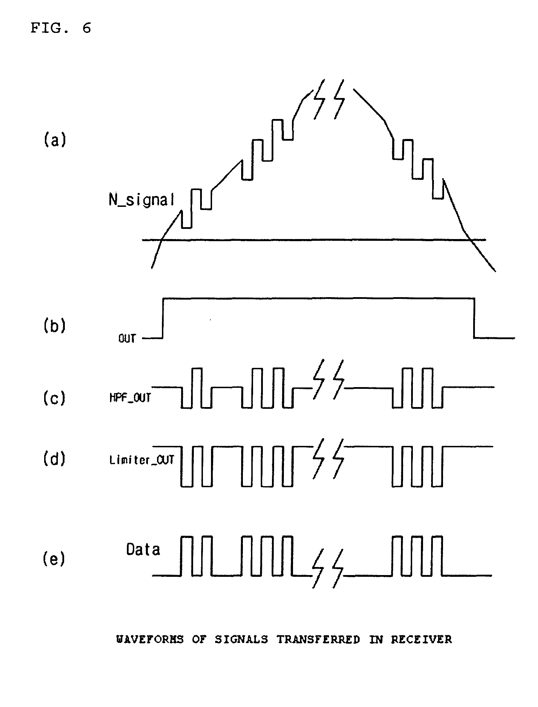

FIG. 6 is a waveform diagram of signals transferred in the receiver of the data communication apparatus using a power line according to an embodiment of the present invention. FIG. 6(a) represents a signal transmitted from the transmitter through the power line N_signal. This signal is applied to the data window detector 80 and a high pass filter 91 of the data pulse detector 90 for detecting only the data component from the signal transmitted through the power line N_signal.

In the data window detector 80, a clamping unit 81 consisting of resistors R3 and R4, a condenser C4 and a diode D2 clamps the signal transmitted through the power line N_signal, as shown in FIG. 6(a), and a comparator 82 compares the clamped signal with a reference voltage V_det and outputs a logic high signal as shown in FIG. 6(b) during the period in which the data is loaded on the AC voltage signal. The comparator 82 informs the microcomputer 100 of a period in which effective data is loaded.

The signal that has passed through the high pass filter 91 of the data pulse detector 90 has a waveform as shown in FIG. 6(c). The signal of FIG. 6(c) passes through a limiter 92 and is restored as shown in FIG. 6(d). The restored signal passes through an inverter 93 and restored to the data as shown in FIG. 6(e), which has been transmitted from the transmitter. The data is applied to the microcomputer 100 and the microcomputer 100 controls the corresponding electric device.

The circuit shown in FIG. 3 is constructed without using a microcomputer.

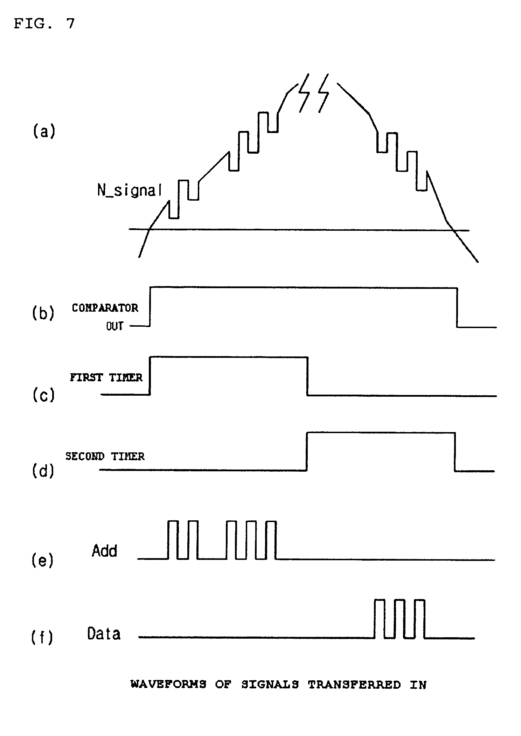

FIG. 7 is a waveform diagram of signals transferred in the receiver of the data communication apparatus using a logic circuit according to another embodiment of the present invention. In FIG. 3, the first timer 111 maintains a predetermined time from a rising edge of the output signal of the comparator 82 to detect the address signal Add of the control signal transmitted from the transmitter, and the second timer 112 maintains a predetermined time from a falling edge of the output signal of the first timer 111 to detect the data signal Data from the control signal. The address signal Add and the data signal Data are separated from the output signals of the first and second timers 111 and 112 and the control signal Address+Data from the AC power line using the first and second AND gates AND1 and AND2.

When the receiver receives the data-loaded AC voltage signal as shown in FIG. 7(a), the data window detector 80 outputs a logic high signal as shown in FIG. 7(b) during a period in which the data is loaded on the AC voltage signal. Here, the data pulse detector 90 detects the signal including the address signal and the data signal and the first timer 111 outputs an address detection signal as shown in FIG. 7(c), which is maintained for a predetermined time from a rising edge of the output signal of the comparator 82. Then, the first AND gate AND1 detects the address signal ADD as shown in FIG. 7(e) during a high period of the output signal of the first timer 111. The second timer 112 outputs a logic high signal as shown in FIG. 7(d) from a falling edge of the output signal of the first timer 111 to a falling edge of the output signal of the comparator 82 during which the second AND gate AND2 detects the data signal Data as shown in FIG. 7(f) .

When the receiver is constructed using the logic gates AND1 and AND2 instead of the microcomputer, as described above, the receiver becomes cheap and compact. Accordingly, the receiver can be directly attached to an electric device and used for remote control using a power line.

As described above, the present invention cuts an AC voltage signal in the form of a square-wave pulse signal, loads data on the AC voltage signal and transmits the data-loaded AC voltage signal from a transmitter to a receiver when the transmitter and the controller form a closed circuit to prevent the signal from unnecessarily propagating to neighboring devices. Furthermore, the communication apparatus of the present invention does not require a filter and includes a transmitter and a receiver having a very simple configuration. Accordingly, the communication apparatus for transmitting data using a power line can be constructed at a low cost.

In a ubiquitous environment, to control various terminal devices such as lighting devices, curtains, valves, motors and doors require a high system equipment cost. However, when the present invention is used, the terminal devices can be easily and accurately controlled and a control system can be constructed at a very low cost.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

## Claims

1. A data communication method using a power line, in which transmitter transmits data using power lines L and N and a receiver connected to a load, which forms a closed circuit with the transmitter, receives the data, the data communication method comprising the steps of:
generating data to be transmitted in the form of a square-wave signal having a predetermined level;
directly cutting an AC voltage signal in such a manner that sections of the AC voltage signal, which correspond to data transmission periods, are down/up based on the square-wave signal and the square-wave signal is carried on the AC voltage signal; and
transmitting the data-loaded AC voltage signal.

2. A data communication apparatus using a power line, in which transmitter transmits data using power lines L and N and a receiver, which forms a closed circuit with the transmitter, receives the data, wherein the transmitter comprises:
a transmitter power supply unit 10 for receiving power from a power line N and generating a DC voltage for operating components of the transmitter;
a data window detector 20 for clamping a voltage signal from the power line N and comparing the clamped voltage signal with a reference voltage to detect a section of the voltage signal on which data will be loaded;
a microcomputer 30 for transmitting the data in a data-loading period based on the signal output from the data window detector 20 and controlling data transmission in response to a reception feedback signal from a receiver;
a data modulator 40 for loading the data transmitted from the microcomputer 30 on the voltage signal from the power line N in the form of a pulse signal;
a pulse level controller 50 for detecting a pulse level of an output terminal of the data modulator 40, comparing the pulse level with a user-set level and adjusting a drive voltage of the data modulator 40 according to a difference between the pulse level and the user-set level to control a data transmission pulse level to be stabilized; and
a reception detector 60 for transmitting the output signal of the data modulator 40 to the power line N, detecting a current variation according to whether the receiver receives the signal transmitted from the transmitter and feeding back information on whether the receiver receives the signal transmitted from the transmitter to the microcomputer 30.

3. The data communication apparatus using a power line according to claim 2, wherein the data window detector 20 comprises:
a clamping unit 21 for dividing the voltage of the power line N using two resistors R1 and R2 and clamping the voltage using a diode D1 and a condenser C1; and
a comparator 22 for comparing the output signal of the clamping unit 21 with a reference voltage V_det and outputting a high level square-wave signal in a data loading period.

4. The data communication apparatus using a power line according to claim 2, wherein the data modulator 40 comprises:
a driver 41 for generating a driving signal according to the data transmitted from the microcomputer 30;
a switching transistor M1 controlled to be turned on/off by the driver 41;
a transformer T1 that switches a DC current of a primary coil thereof according to the switching transistor M1 and outputs the switched DC voltage as a pulse signal to a secondary coil thereof;
a triac Q1 controlled to be turned on/off by the output signal of the secondary coil of the transformer T1; and
a bridge diode BD1 having a negative terminal receiving the voltage signal of the power line N, a middle control terminal receiving the output signal of the triac Q1 and a positive terminal outputting the voltage signal including the data.

5. The data communication apparatus using a power line according to claim 2, wherein the pulse level controller 50 comprises:
a band pass filter 51 for filtering the output signal of the data modulator 40;
a pre-amplifier 52 for amplifying the output signal of the band pass filter 51;
a level controller 53 for setting a reference value for controlling the level of the data included in the voltage signal according to a variable resistor VR5 controlled by a user;
an error amplifier 54 for comparing the reference value set by the level controller 53 with a pulse level detected by the pre-amplifier 52 and outputting a control signal according to the difference between the reference value and the pulse level; and
a shunt regulator 55 for controlling a drive voltage Vdrv provided to the primary coil of the transformer T1 of the data modulator 40 according to the output signal of the error amplifier 54.

6. A data communication apparatus using a power line, in which transmitter transmits data using power lines L and N and a receiver, which forms a closed circuit with the transmitter, receives the data, the receiver comprising:
a rectifier 70 for rectifying power from power lines L and N of the receiver to generate a receiver operating voltage;
a receiver data window detector 80 for clamping an AC voltage from the power line N that transmits data, comparing the clamped AC voltage with a reference voltage and detecting a section of the AC voltage in which the data will be loaded;
a data pulse detector 90 for filtering and limiting a pulse signal from the power line N to detect a square-wave pulse signal; and
a microcomputer 100 for detecting an address signal Add and a data signal Data from the square-wave pulse signal detected by the data pulse detector 90 to receive the data according to the output signal of the data window detector 80, and outputting a control signal according to the received data.

7. A data communication apparatus using a power line, in which transmitter transmits data using power lines L and N and a receiver, which forms a closed circuit with the transmitter, receives the data, wherein the receiver comprises:
a rectifier 70 for rectifying power from power lines L and N of the receiver to generate a receiver operating voltage;
a receiver data window detector 80 for clamping an AC voltage from the power line N that transmits data, comparing the clamped AC voltage with a reference voltage and detecting a section of the AC voltage on which the data will be loaded;
a data pulse detector 90 for filtering and limiting a pulse signal from the power line N to detect a square-wave pulse signal; and
a first timer 111 for delaying the signal output from the data window detector 80 by a predetermined time;
a second timer 112 for delaying the output signal of the first timer 111 by a predetermined time;
a first AND gate AND1 for detecting the output signal of the data pulse detector 90 in a period during which the first timer 111 outputs a signal to detect an address signal Add; and
a second AND gate AND2 for detecting the output signal of the data pulse detector 90 in a period during which the second timer 112 outputs a signal to detect a data signal Data.
